# EUROPEAN PATENT SPECIFICATION

(11) **EP 2 598 444 B1**
(45) Date of publication and mention of the grant of the patent: **14.10.2015**
(21) Application number: 11744088.3
(22) Date of filing: 11.07.2011
(51) Int. Cl.: C02F 1/32, H01J 61/10, H01J 65/04, A61L 2/10

(54) **DEVICE FOR SUBJECTING A FLUID TO A DISINFECTING TREATMENT BY EXPOSING THE FLUID TO ULTRAVIOLET LIGHT**
VORRICHTUNG ZUR DESINFIZIERENDEN BEHANDLUNG EINER FLÜSSIGKEIT DURCH BESTRAHLUNG DER FLÜSSIGKEIT MIT ULTRAVIOLETTEM LICHT
DISPOSITIF PERMETTANT DE SOUMETTRE UN FLUIDE À UN TRAITEMENT DÉSINFECTANT EN EXPOSANT LE FLUIDE À UN RAYONNEMENT ULTRAVIOLET

(30) Priority: 26.07.2010 EP 10170750
(43) Date of publication of application: 05.06.2013
(73) Proprietor: Koninklijke Philips N.V., 5656 AE Eindhoven (NL); Philips Intellectual Property & Standards GmbH, 20299 Hamburg (DE)
(72) Inventor: MONDT, Eva, NL-5656 AE Eindhoven (NL); HOLWERDA, Einte, NL-5656 AE Eindhoven (NL); HAYASHI, Daiyu, 52066 Aachen (DE); GREUEL, Georg, 52066 Aachen (DE)
(74) Representative: Coops, Peter
(86) International application number: PCT/IB2011/053069
(87) International publication number: WO 2012/014108

(56) References cited:
- EP-A1- 2 284 127
- WO-A1-2009/006702
- WO-A1-2010/079401

## Description

### FIELD OF THE INVENTION

The present invention relates to a device for subjecting a fluid to a disinfecting treatment by exposing the fluid to ultraviolet light, said device comprising a reactor having an inner space in which means for emitting ultraviolet light are arranged, an inlet for letting fluid into the inner space, and an outlet for letting out fluid from the inner space, wherein the light emission means comprise a single electrode, and wherein a wall encompassing the inner space is adapted to function as an electrode and comprises electrically conductive material.

### BACKGROUND OF THE INVENTION

A device for subjecting a fluid to a disinfecting treatment by exposing the fluid to ultraviolet (UV) light is well-known. For example, for the microbiological disinfection of drinking water, it is known to use a source/lamp for emitting so-called UV-C radiation, which is ultraviolet light having relatively short waves with a wavelength in the order of 100 to 280 nm. For domestic applications, the UV-C source is usually enclosed in a non-opaque housing, permitting exposure of the fluid to the UV-C radiation while preventing harmful influence of the radiation on the surroundings. For sufficient germicidal action, a certain dose of ultraviolet radiation is needed, wherein the dose is determined by the irradiance of the source multiplied by the residence time of micro-organisms / pathogens in a fluid treatment area inside the housing. The irradiance of the source is determined by the type of the source and properties of the fluid, especially the capacity of the fluid to transmit ultraviolet light, whereas the residence time is determined by the length of flow paths through the fluid treatment area.

In many cases, a low pressure mercury lamp is used as the ultraviolet source. An alternative type of lamp is a lamp designed to function according to the so-called dielectric barrier discharge principle, which is known as DBD lamp. Advantages of this lamp include instantaneous use of the lamp, i.e. there is no need for preheating, reduced temperature dependency of the operation of the lamp, increased UV-C output, on the basis of which miniaturization is possible, and no application of mercury or other hazardous material.

A DBD lamp can be equipped with only one electrode, in which case the lamp can only be ignited when the lamp is in contact with an electrically conductive fluid or material. When such a lamp is applied in a device for subjecting a fluid to a disinfecting treatment, the fluid is made to surround the lamp and is part of an electrical path in the device leading from the electrode inside the lamp to another electrode, which is constituted by a wall encompassing a space in which the lamp and the fluid are present. In the case that the fluid is a liquid such as water, the wall can be made of a metal sheet, for example. If the fluid is a gas such as air, the wall can be a wire frame, and can be made of chicken wire, for example. In the latter case, it is important for the wall to be in the vicinity of or in contact with an outer bulb of the lamp, in view of the fact that air has poorer qualities than water, for example, when it comes to conducting electricity. In practice, when a wire frame is used, this frame is placed around an outer surface (bulb) of the lamp.

When applying an ultraviolet lamp for disinfecting a fluid, it has to be kept in mind that the irradiance of the lamp decreases with increasing radial distance to the lamp. Especially if the fluid to be treated has a low transmittance, the penetration depth of the ultraviolet light into the fluid is limited. For instance, if the fluid to be treated is drinking water, the penetration depth is typically a few centimeters, and if the fluid to be treated is a juice or other highly absorbent liquid, the penetration depth can be less than one millimeter. The reduction of the intensity of the ultraviolet light with distance either limits throughput in the devices having the ultraviolet lamp, or requires a minimal volume of the space in which the lamp is arranged, or requires strong mixing and turbulence, increasing the pressure loss over the space.

An increase of the disinfection capacity of the lamp or a decrease of the building volume can be achieved by enlarging the ultraviolet irradiance. This can be realized by increasing the power input to the lamp, for example. However, this solution has some disadvantages, including a reduced lifetime of the lamp.

WO2009006702 A1 discloses a method and apparatus for effecting a chemical reaction III, WO2010079401 A1 discloses an optical reactor and driving circuit for optical reactor, and EP2284127A discloses a device comprising a source for emitting UV light.

### SUMMARY OF THE INVENTION

It is an object of the present invention to provide another option for compensating for the decrease in ultraviolet intensity with distance, which yields useful results, and which can be implemented in a device comprising light emission means, a reactor having an inner space for accommodating the light emission means and for exposing a quantity of fluid to the light emission means, and an electrically conductive reactor wall. The object of the present invention is achieved by means of a device which further comprises means which also comprise electrically conductive material, and which are arranged for locally enhancing the electrical conductivity in a space between the reactor wall and the light emission means.

When the present invention is applied, the decrease in ultraviolet intensity with distance can be compensated for at positions where this is required, namely by providing means comprising electrically conductive material, which means are arranged for locally enhancing the electrical conductivity in a space between the reactor wall and the light emission means. In the case that the light emission means comprise a DBD lamp, and the fluid to be treated has poor electrical conductivity properties, it is possible that the ultraviolet intensity is considerably reduced at the ends of the lamp. According to the present invention, such a problem can be solved by using means for locally enhancing the electrical conductivity at the ends of the lamp, so that the electrical resistance can be reduced at those positions. As a consequence, the ultraviolet intensity can be increased at those positions, and a more evenly distributed ultraviolet output of the lamp can be obtained, so that the disinfecting capacity at the inlet and the outlet of the reactor can be enlarged. Experiments performed in the context of the present invention have shown that the increasing effect as mentioned is especially obtained when the electrical conductivity of the fluid to be treated is low, particularly when the time constant of the fluid is larger than the rise time of the voltage pulse between the electrodes.

The means for locally enhancing the conductivity in the space between the reactor wall and the light emission means may be realized in various ways, which do not need to involve the application of expensive components. On the contrary, the means may comprise at least one elongated element extending from the reactor wall toward the light emission means, wherein such an element may simply be a metal rod or wire, for example. In general, such an element may be a rod-shaped element or a wire-shaped element, and may be arranged such as to extend between the reactor wall and an outer shell of the light emission means, although physical contact between the element and the light emission means is not required.

According to another option, the means for locally enhancing the conductivity in the space between the reactor wall and the light emission means may comprise at least one plate having holes. An advantage of such an embodiment is that the means may have the additional function of straightening the flow of fluid through the reactor, which causes an enhancement of the dose of ultraviolet radiation. In a practical embodiment, the plate can have a closed central portion, i.e. a central portion that is free from holes, so that the plate is suitable to be used at an end of an ultraviolet lamp having a central position in a reactor which furthermore has a centrally positioned inlet, and to perform a shielding function by covering the end of the lamp.

In general, it is advantageous if the means for locally enhancing the conductivity in the space between the reactor wall and the light emission means are designed such as not to disturb the flow of fluid through the reactor, or such as to even have a flow-forming function. Furthermore, it is important for the means not to block the ultraviolet output of the light emission means at positions where the output is required to guarantee a minimum ultraviolet dose performance according to the specifications.

Advantageously, the means for locally enhancing the conductivity in the space between the reactor wall and the light emission means are furthermore adapted to reflect ultraviolet light. For example, the means may comprise a reflective material, or may be covered with a reflective layer. On the basis of reflection, intensity of ultraviolet radiation can be increased, since reflective materials ensure that a large part of ultraviolet light is forced back toward the fluid to be treated once it reaches a surface where those materials are present.

It is also advantageous for the means for locally enhancing the conductivity in the space between the reactor wall and the light emission means to be furthermore adapted to shield parts of the device in which the means are positioned from ultraviolet radiation emitted by the light emission means during operation. For example, this is possible when the means for locally enhancing the conductivity in the space between the reactor wall and the light emission means comprise at least one plate having holes arranged outside of a closed central portion, as has been mentioned in the foregoing. In general, when the means are designed to perform various functions, the device in which the means are positioned can have a compact design with a minimum number of parts.

All in all, the present invention provides for an increase in ultraviolet intensity at any desired position in a reactor of a device for subjecting a fluid to a disinfecting treatment. To this end, the device is equipped with means having electrical conductivity properties, which means are arranged inside the reactor for locally enhancing the electrical conductivity in the space between the reactor wall and the light emission means. The means may comprise at least one elongated element, or a plate having holes, for example. In the latter case, the means can also be used for performing a straightening function on a flow of fluid through the device. The means can have other additional functions as well, namely the function of reflecting ultraviolet radiation, and/or the function of shielding parts from ultraviolet radiation.

The above-described and other aspects of the present invention will be apparent from and elucidated with reference to the following detailed description of a water disinfecting device comprising a reactor and an ultraviolet lamp, particularly with reference to a detailed description of various embodiments of elements or plates which are used with the device, and which have a function in locally enhancing the electrical conductivity between the lamp and a wall of the reactor which is used as one of two electrodes of the device.

### BRIEF DESCRIPTION OF THE DRAWINGS

The present invention will now be explained in greater detail with reference to the Figures, in which equal or similar parts are indicated by the same reference signs, and in which:
Figure 1 diagrammatically shows a water disinfecting device comprising a reactor and an ultraviolet lamp;
Figure 2 diagrammatically shows an end portion of the lamp of the water disinfecting device, an end portion of the reactor, and a multifunctional element which serves for forming a flow of water through the reactor, and for reflecting ultraviolet light, and for locally enhancing the electrical conductivity in a space between the wall of the reactor and the lamp, and which multifunctional element is arranged at an end of the lamp;
Figure 3 diagrammatically shows a first example of the multifunctional element;
Figure 4 diagrammatically shows a second example of the multifunctional element;
Figure 5 diagrammatically shows a third example of the multifunctional element;
Figure 6 diagrammatically shows an end portion of the lamp of the water disinfecting device, an end portion of the reactor, and elements for locally enhancing the electrical conductivity in a space between the wall of the reactor and the lamp, which elements are arranged near an end of the lamp.

### DETAILED DESCRIPTION OF EMBODIMENTS

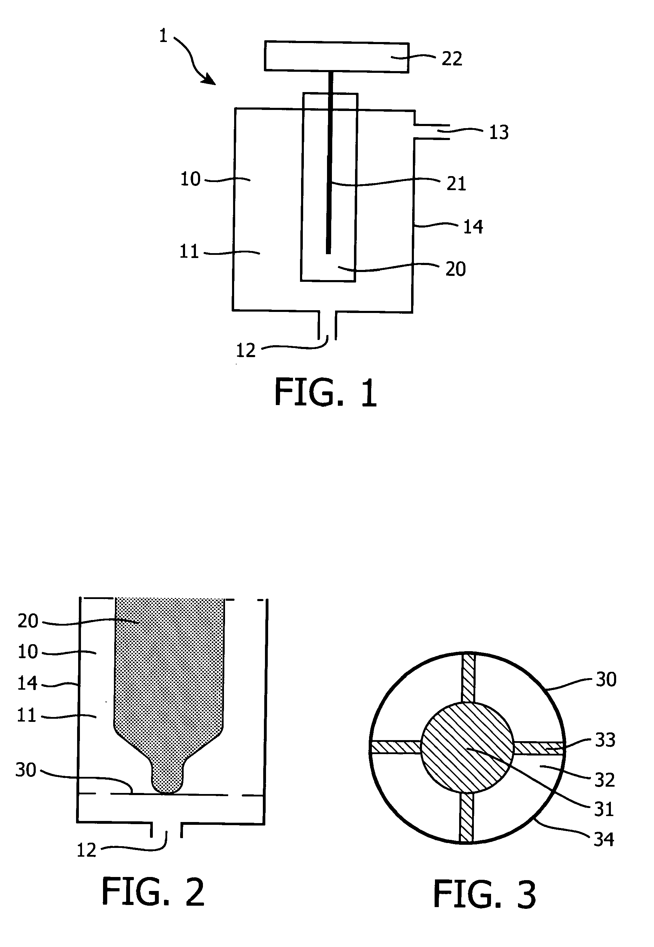

Figure 1 shows a device 1 which is designed to be used for disinfecting water. For the sake of completeness, it is noted that this device 1 is described as one example of many devices which are feasible within the scope of the present invention, including air purification devices and devices for disinfecting liquids other than water.

The water disinfecting device 1 comprises a reactor 10, i.e. a container having an inner space 11 in which the water disinfecting process is meant to take place during operation of the device 1. The reactor 10 has an inlet 12 for letting in water to be treated, and an outlet 13 for letting out water. Furthermore, the water disinfecting device 1 comprises a lamp 20 for emitting ultraviolet light, which lamp is arranged inside the reactor 10. In the shown example, the lamp 20 has an elongated shape, and has a central position in the reactor 10, which is the most practical position, since this allows effective use of the entire surface of the lamp 20.

The lamp 20 may be designed so as to function according to the so-called dielectric barrier discharge principle, in which case the lamp is referred to as DBD lamp. Such a lamp 20 has one electrode 21, and a wall 14 of the reactor 10 comprises an electrically conductive material, such as metal, for constituting another electrode, wherein the reactor wall 14 is grounded. When the reactor 10 is filled with water, the water is part of an electrical path, leading current from the electrode 21 inside the lamp 20 toward the outer electrode, i.e. the electrically conductive reactor wall 14. Thus, the lamp 20 can only be ignited when there is water surrounding it. In Figure 1, a power supply to the electrode 21 inside the lamp 20 is diagrammatically shown as a block, and is indicated by reference numeral 22.

When the water disinfecting device 1 is operated, water is made to flow through the reactor 10, from the inlet 12 to the outlet 13, and the lamp 20 is operated to emit ultraviolet light. Under the influence of the ultraviolet light, the disinfecting process of the water takes place in a manner which is known per se. In order for the water disinfecting process to be realized in such a way that a prescribed dose of ultraviolet light is achieved, measures are taken for improving the intensity of the ultraviolet radiation, which normally decreases with distance from the lamp 20.

In particular, the water disinfecting device 1 is equipped with reflector elements 30 for locally increasing the ultraviolet intensity. For example, there may be two reflector elements 30 in the device 1, wherein each of the reflector elements 30 is arranged at another end of the lamp 20. One such reflector element 30 is illustrated in Figure 2. In order to guarantee optimal performance, it is preferred for the reflector elements 30 not to disturb the field of flow of the water passing the lamp 20. Therefore, it is advantageous if the reflector elements 30 are non-disturbing flow elements or even flow-forming elements. Also, the reflector elements 30 should be arranged such as to avoid blockage of the ultraviolet output of the lamp 20 at positions where the ultraviolet output is required to guarantee a minimum ultraviolet dose performance according to the specifications.

The reflector elements 30 are capable of locally increasing the ultraviolet intensity on the basis of the fact that a part of the ultraviolet light is sent back, i.e. is reflected at a reflective surface of the reflector elements 30. When non-reflective materials are used, all of the ultraviolet light reaching the non-reflective material is absorbed by said material. Reflective materials on the other hand ensure that a considerable part of the ultraviolet light reaching the reflective surface is forced back toward the water again. Furthermore, as has been noted before, the reflector elements 30 can have the additional function of forming a flow of water. In this respect, Figures 3, 4 and 5 illustrate various embodiments of reflector elements 30 which are suitable for performing both a reflecting function and a flow-straightening function.

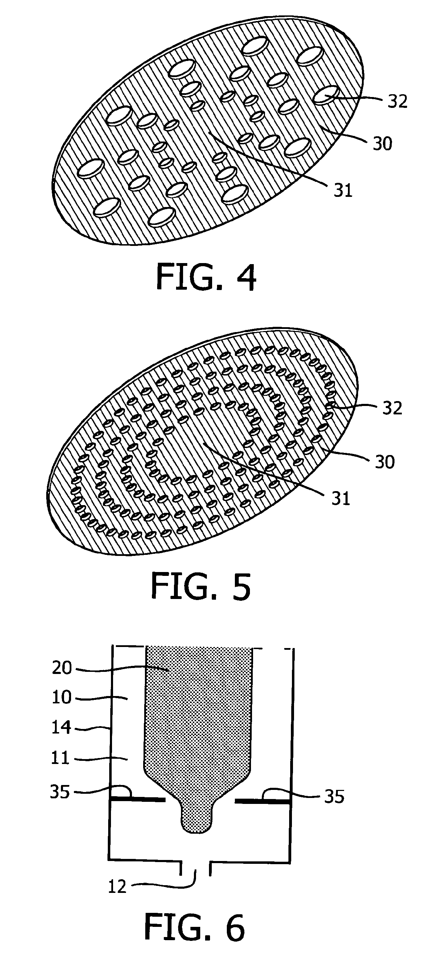

In all of the shown embodiments, a central portion 31 of the elements 30 is closed, while the elements 30 have holes 32 outside of that portion 31. On the basis of the presence of the holes 32, it is possible to have enough open spaces in the elements 30 for allowing water to pass. In the first embodiment as shown in Figure 3, the element 30 has four spokes 33 extending between the central portion 31 and a circumferential ring 34. Hence, there are four relatively large holes 32 in the element 30. In both the second embodiment as shown in Figure 4 and the third embodiment as shown in Figure 5, there are more holes 32, wherein in the third embodiment, the number of holes 32 is the largest and the diameter of the holes 32 is the smallest.

When the element 30 is arranged on an inlet side of the reactor 10, the closed central portion 31 has the function of reducing the jet of water from the inlet 12, whereas the holes 32 play a role in forming the flow of water. It is advantageous if a similar element 30 is used on an outlet side of the reactor 10, wherein the element 30 can have a central hole for allowing the element 30 to be positioned on an end portion of the lamp 20. When such an element 30 is used, the element 30 serves as a divider plate which has a role in avoiding that the water finds the fastest way toward the outlet 13. If the element 30 were not be present, and the outlet 13 would have a non-central position in the reactor wall 14 as is the case in the example shown in Figure 1, a skewed velocity profile would be created. Hence, on the basis of the presence of the divider plate, it is possible to achieve both an optimization of the flow profile of the water and an increase of the ultraviolet intensity, wherein the latter is a result of the reflective properties of the plate.

For the sake of completeness, it is noted that positions of the reflector elements 30 as described in the foregoing are just examples of possible positions, and that, within the scope of the present invention, other positions are possible as well.

According to the present invention, besides the functions of reflecting ultraviolet light emitted by the lamp 20 and straightening a flow of water, the reflector elements 30 have another function, namely the function of locally reducing the electrical resistance between the lamp 20 and the grounded reactor wall 14. Reflector elements 30 having this third function comprise material having electrically conductive properties. The function of locally reducing the electrical resistance as mentioned is typically relevant when the electrical conductivity of the water surrounding the lamp 20 is low, and, as a consequence, the ultraviolet intensity at the ends of the lamp 20 is lower than the ultraviolet intensity at the centre of the lamp 20. When the reflector elements 30 have electrically conductive properties and are arranged at the ends of the lamp 20, it is achieved that the ultraviolet intensity at the ends of the lamp 20 is increased and the ultraviolet output along a length of the lamp 20 is more evenly distributed. This results in an increase of the disinfection capacity at the inlet 12 and the outlet 13 of the reactor 10.

Physical contact between the elements 30 and the lamp 20 is not required. The placement of electrically conductive material near a surface of the lamp 20 already increases the ultraviolet intensity locally. Hence, it is possible to put the elements 30 at a certain distance from the surface of the lamp 20. They can be placed in such a way that the extent to which the ultraviolet radiation is blocked is minimized, or that there is no blockage at all at certain positions inside the reactor 10, so that the reflecting function of the elements 30 can be optimal. In the case of treatment of water having a low electrical conductivity, the ultraviolet intensity is locally increased on the basis of both the reflective properties and electrically conductive properties of the elements 30.

When the elements 30 are shaped like plates, and when the elements 30 are positioned at the ends of the lamp 20, near the inlet 12 and the outlet 13 of the reactor 10, there may be a fourth function associated with the elements 30, namely the function of shielding parts of the water disinfecting device 1 from ultraviolet radiation. For example, the device 1 may comprise end caps in which the inlet 12 and the outlet 13 are arranged, and when it is ensured that the ultraviolet radiation emitted by the lamp 20 cannot reach the end caps, it is possible to manufacture them from a material that is relatively cheap and easy to shape.

Materials suitable to be used for the elements 30 include metals, like aluminium, (stainless) steel, etc., wherein these metals can be electropolished. As far as reflection of the ultraviolet radiation is concerned, this can optionally be achieved using expanded polytetrafluorethylene (ePTFE) or high band gap ceramics like Al₂O₃. Such materials have diffuse reflection, whereas metals have directed reflection. Both types of reflective materials can be used, as well as opaque materials with low absorption in a relevant range of wavelengths.

Within the scope of the present invention, it is not necessary for one element 30 to combine the various functions of flow forming, reflecting ultraviolet light, and locally reducing the electrical resistance. It is also possible to have just one or two of these functions in a single element 30.

Figure 6 shows an example of an element 35 which is adapted to avoid disturbance of a water flow, and to improve electrical conductivity. The element 35 can be a metal wire or rod extending from the reactor wall 14, and possibly also touching the surface of the lamp 20. The wire or rod is capable of locally improving electrical conductivity, thereby locally improving the ultraviolet intensity, while minimum shading effects and minimum flow disturbance effects are generated due to the fact that a wire or rod has a small surface area. Figure 6 illustrates the fact that it is possible to apply a number of wires or rods at a similar level in the reactor 10, wherein the wires or rods may be evenly distributed along the circumference of the lamp 20. For example, the number of wires or rods at one level can be two, three, or four.

It will be clear to a person skilled in the art that the scope of the present invention is not limited to the examples discussed in the foregoing, but that several amendments and modifications thereof are possible without deviating from the scope of the present invention as defined in the attached claims. While the present invention has been illustrated and described in detail in the Figures and the description, such illustration and description are to be considered illustrative or exemplary only, and not restrictive. The present invention is not limited to the disclosed embodiments.

Variations to the disclosed embodiments can be understood and effected by a person skilled in the art in practicing the claimed invention, from a study of the Figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the present invention.

It is noted that in the context of this description, the terms "ultraviolet light" and "ultraviolet radiation" are used to indicate one and the same phenomenon, namely light waves having a wavelength in the ultraviolet region. Furthermore, the term "fluid" is meant to include both liquids and gases.

The present invention is suitable to be applied with any type of DBD lamp 20, and with any application of such a lamp 20. The use of means 30 for locally enhancing electrical conductivity, and possibly also for reflecting ultraviolet light, and for shielding parts from ultraviolet light, and/or for straightening a flow of fluid, is especially advantageous in situations where a high ultraviolet absorbent material is to be disinfected by means of the lamp 20. Hence, the present invention is very suitable to be applied in the field of disinfection of grey water or waste water. Other fields of application are air purification, and treatment of potable water, probably in an on-tap system, in which an ultraviolet treatment device is directly mounted on a faucet or even inside tubing toward a faucet.

The present invention can be summarized as follows. A device 1 for subjecting a fluid to a disinfecting treatment by exposing the fluid to ultraviolet light comprises a reactor 10 having an inner space 11 in which means 20 for emitting ultraviolet light are arranged, an inlet 12 for letting fluid into the inner space 11, and an outlet 13 for letting out fluid from the inner space 11. The light emission means 20 comprise a single electrode 21, wherein a wall 14 encompassing the inner space 11 is adapted to function as an electrode and comprises electrically conductive material, and wherein the device 1 further comprises means 30, 35 which also comprise electrically conductive material, and which are arranged for locally enhancing the electrical conductivity in a space between the reactor wall 14 and the light emission means 20. By applying these means 30, 35, it is achieved that the disinfecting effect of the ultraviolet light treatment can be improved.

## Claims

1. Device (1) for subjecting a fluid to a disinfecting treatment by exposing the fluid to ultraviolet light, said device comprising a reactor (10) having an inner space (11) in which means (20) for emitting ultraviolet light are arranged, an inlet (12) for letting fluid into the inner space (11), and an outlet (13) for letting out fluid from the inner space (11), wherein the light emission means (20) comprise a single electrode (21), wherein a wall (14) encompassing the inner space (11) is adapted to function as an electrode and comprises electrically conductive material, and wherein the device (1) further comprises means (30, 35) which also comprise electrically conductive material, and which are arranged for locally enhancing the electrical conductivity in a space between the reactor wall (14) and the light emission means (20).

2. Device (1) according to claim 1, wherein the means (30, 35) for locally enhancing the electrical conductivity in the space between the reactor wall (14) and the light emission means (20) comprise at least one elongated element (35) extending from the reactor wall (14) toward the light emission means (20).

3. Device (1) according to claim 2, wherein the elongated element (35) extends between the reactor wall (14) and an outer shell of the light emission means (20).

4. Device (1) according to claim 2, wherein the elongated element (35) is a rod-shaped element.

5. Device (1) according to claim 2, wherein the elongated element (35) is a wire-shaped element.

6. Device (1) according to claim 1, wherein the means (30, 35) for locally enhancing the electrical conductivity in the space between the reactor wall (14) and the light emission means (20) are furthermore adapted to form a flow of fluid.

7. Device (1) according to claim 6, wherein the means (30, 35) for locally enhancing the electrical conductivity in the space between the reactor wall (14) and the light emission means (20) are furthermore adapted to reflect ultraviolet light.

8. Device (1) according to claim 6, wherein the means (30, 35) for locally enhancing the electrical conductivity in the space between the reactor wall (14) and the light emission means (20) are furthermore adapted to shield parts of the device (1) from the ultraviolet radiation emitted by the light emission means (20) during operation.

9. Device (1) according to claim 6, wherein the means (30, 35) for locally enhancing the electrical conductivity in the space between the reactor wall (14) and the light emission means (20) comprise at least one plate (30) having holes (32).

10. Device (1) according to claim 9, wherein a central portion (31) of the plate (30) is free from holes (32).

11. Device (1) according to claim 9, wherein the light emission means (20) comprise an elongated lamp (20), and wherein the plate (30) is arranged at an end of the lamp (20).

12. Device (1) according to claim 1, wherein the means (30, 35) for locally enhancing the electrical conductivity in the space between the reactor wall (14) and the light emission means (20) are furthermore adapted to reflect ultraviolet light.

13. Device (1) according to claim 1, wherein the means (30, 35) for locally enhancing the electrical conductivity in the space between the reactor wall (14) and the light emission means (20) are furthermore adapted to shield parts of the device (1) from the ultraviolet radiation emitted by the light emission means (20) during operation.

## Patentansprüche

1. Gerät (1), um eine Flüssigkeit einer Desinfizierungsbehandlung durch Aussetzen der Flüssigkeit an ein ultraviolettes Licht zu unterziehen, wobei das Gerät ein Reaktionsgefäß (10) mit einem Innenraum (11) umfasst, worin Mittel (20) zur Ausgabe ultravioletten Lichts, ein Einlass (12) zum Einlass der Flüssigkeit in den Innenraum (11), und ein Auslass (13) zum Auslassen der Flüssigkeit aus dem Innenraum (11) angeordnet sind, wobei die Lichtemissionsmittel (20) eine einzelne Elektrode (21) umfassen, wobei eine Wand (14) umfassend den Innenraum (11) angepasst ist, um als eine Elektrode zu funktionieren und elektrisch leitfähiges Material umfasst, und wobei das Gerät (1) des Weiteren Mittel (30, 35) umfasst, die auch elektrisch leitfähiges Material umfassen, und die zur Steigerung der elektrischen Leitfähigkeit in einem Raum zwischen der Reaktionsgefäßwand (14) und den Lichtemissionsmitteln (20) angeordnet sind.

2. Gerät (1) nach Anspruch 1, wobei die Mittel (30, 35) zur Steigerung der elektrischen Leitfähigkeit im Raum zwischen der Reaktionsgefäßwand (14) und den Lichtemissionsmitteln (20) mindestens ein gestrecktes Element (35), das sich von der Reaktionsgefäßwand (14) zu den Lichtemissionsmitteln (20) erstreckt.

3. Gerät (1) nach Anspruch 2, wobei das gestreckte Element (35) sich zwischen der Reaktionsgefäßwand (14) und einer äußeren Hülle der Lichtemissionsmitteln (20) erstreckt.

4. Gerät (1) nach Anspruch 2, wobei das gestreckte Element (35) ein stabförmiges Element ist.

5. Gerät (1) nach Anspruch 2, wobei das gestreckte Element (35) ein drahtförmiges Element ist.

6. Gerät (1) nach Anspruch 1, wobei die Mittel (30, 35) zur Steigerung der elektrischen Leitfähigkeit im Raum zwischen der Reaktionsgefäßwand (14) und den Lichtemissionsmitteln (20) des Weiteren angepasst sind, um eine Flüssigkeitsströmung zu bilden.

7. Gerät (1) nach Anspruch 6, wobei die Mittel (30, 35) zur Steigerung der elektrischen Leitfähigkeit im Raum zwischen der Reaktionsgefäßwand (14) und den Lichtemissionsmitteln (20) des Weiteren angepasst sind, um ultraviolettes Licht zu reflektieren.

8. Gerät (1) nach Anspruch 6, wobei die Mittel (30, 35) zur Steigerung der elektrischen Leitfähigkeit im Raum zwischen der Reaktionsgefäßwand (14) und den Lichtemissionsmitteln (20) des Weiteren angepasst sind, um Teile des Geräts (1) von der ultravioletten Strahlung ausgegeben von den Lichtemissionsmitteln (20) im Betrieb abzuschirmen.

9. Gerät (1) nach Anspruch 6, wobei die Mittel (30, 35) zur Steigerung der elektrischen Leitfähigkeit im Raum zwischen der Reaktionsgefäßwand (14) und den Lichtemissionsmitteln (20) mindestens eine Platte (30) mit Löchern (32) umfassen.

10. Gerät (1) nach Anspruch 9, wobei ein mittlerer Abschnitt (31) der Platte (30) frei von Löchern (32) ist.

11. Gerät (1) nach Anspruch 9, wobei die Lichtemissionsmittel (20) eine längliche Lampe (20) umfassen, und wobei die Platte (30) an einem Ende der Lampe angeordnet ist (20).

12. Gerät (1) nach Anspruch 1, wobei die Mittel (30, 35) zur Steigerung der elektrischen Leitfähigkeit im Raum zwischen der Reaktionsgefäßwand (14) und den Lichtemissionsmitteln (20) des Weiteren angepasst sind, um ultraviolettes Licht zu reflektieren.

13. Gerät (1) nach Anspruch 1, wobei die Mittel (30, 35) zur Steigerung der elektrischen Leitfähigkeit im Raum zwischen der Reaktionsgefäßwand (14) und den Lichtemissionsmitteln (20) des Weiteren angepasst sind, um Teile des Geräts (1) von der ultravioletten Strahlung ausgegeben von den Lichtemissionsmitteln (20) im Betrieb abzuschirmen.

## Revendications

1. Dispositif (1) pour soumettre un fluide à un traitement de désinfection par exposition du fluide à une lumière ultraviolette, ledit dispositif comprenant un réacteur (10) comportant un espace intérieur (11) dans lequel des moyens (20) pour émettre une lumière ultraviolette sont agencés, une entrée (12) pour laisser entrer un fluide dans l'espace intérieur (11), et une sortie (13) pour laisser sortir un fluide de l'espace intérieur (11), dans lequel les moyens d'émission de lumière (20) comprennent une électrode unique (21), dans lequel une paroi (14) entourant l'espace intérieur (11) est apte à fonctionner en tant qu'électrode et comprend un matériau électriquement conducteur, et dans lequel le dispositif (1) comprend en outre des moyens (30, 35) qui comprennent également un matériau électriquement conducteur, et qui sont agencés pour améliorer localement la conductivité électrique dans un espace entre la paroi de réacteur (14) et les moyens d'émission de lumière (20).

2. Dispositif (1) selon la revendication 1, dans lequel les moyens (30, 35) pour améliorer localement la conductivité électrique dans l'espace entre la paroi de réacteur (14) et les moyens d'émission de lumière (20) comprennent au moins un élément allongé (35) s'étendant de la paroi de réacteur (14) vers le moyen d'émission de lumière (20).

3. Dispositif (1) selon la revendication 2, dans lequel l'élément allongé (35) s'étend entre la paroi de réacteur (14) et une coque extérieure des moyens d'émission de lumière (20).

4. Dispositif (1) selon la revendication 2, dans lequel l'élément allongé (35) est un élément en forme de tige.

5. Dispositif (1) selon la revendication 2, dans lequel l'élément allongé (35) est un élément en forme de fil.

6. Dispositif (1) selon la revendication 1, dans lequel les moyens (30, 35) pour améliorer localement la conductivité électrique dans l'espace entre la paroi de réacteur (14) et les moyens d'émission de lumière (20) sont en outre aptes à former un flux de fluide.

7. Dispositif (1) selon la revendication 6, dans lequel les moyens (30, 35) pour améliorer localement la conductivité électrique dans l'espace entre la paroi de réacteur (14) et les moyens d'émission de lumière (20) sont en outre aptes à réfléchir la lumière ultraviolette.

8. Dispositif (1) selon la revendication 6, dans lequel les moyens (30, 35) pour améliorer localement la conductivité électrique dans l'espace entre la paroi de réacteur (14) et les moyens d'émission de lumière (20) sont en outre aptes à protéger des parties du dispositif (1) contre le rayonnement ultraviolet émis par les moyens d'émission de lumière (20) en utilisation.

9. Dispositif (1) selon la revendication 6, dans lequel les moyens (30, 35) pour améliorer localement la conductivité électrique dans l'espace entre la paroi de réacteur (14) et les moyens d'émission de lumière (20) comprennent au moins une plaque (30) comportant des trous (32).

10. Dispositif (1) selon la revendication 9, dans lequel une portion centrale (31) de la plaque (30) est dépourvue de trous (32).

11. Dispositif (1) selon la revendication 9, dans lequel les moyens d'émission de lumière (20) comprennent une lampe allongée (20), et dans lequel la plaque (30) est agencée à une extrémité de la lampe (20).

12. Dispositif (1) selon la revendication 1, dans lequel les moyens (30, 35) pour améliorer localement la conductivité électrique dans l'espace entre la paroi de réacteur (14) et les moyens d'émission de lumière (20) sont en outre aptes à réfléchir la lumière ultraviolette.

13. Dispositif (1) selon la revendication 1, dans lequel les moyens (30, 35) pour améliorer localement la conductivité électrique dans l'espace entre la paroi de réacteur (14) et les moyens d'émission de lumière (20) sont en outre aptes à protéger des parties du dispositif (1) contre le rayonnement ultraviolet émis par les moyens d'émission de lumière (20) en utilisation.
